# EUROPEAN PATENT SPECIFICATION

(11) **EP 4 218 703 B1**
(45) Date of publication and mention of the grant of the patent: **21.08.2024**
(21) Application number: 22204255.8
(22) Date of filing: 27.10.2022
(51) Int. Cl.: A61G 5/10, F16F 1/12

(54) **SHOCK ABSORBER FOR WHEELCHAIR**
STOSSDÄMPFER FÜR EINEN ROLLSTUHL
AMORTISSEUR POUR FAUTEUIL ROULANT

(30) Priority: 28.01.2022 TW 111103833
(43) Date of publication of application: 02.08.2023
(73) Proprietor: Karma Medical Products Co., Ltd., Minsyong Township Chiayi County 62145 (TW)
(72) Inventor: YANG, Yao-Lung, 62145 Minsyong Township (TW); OU, Yu-Heng, 62145 Minsyong Township (TW)
(74) Representative: Mewburn Ellis LLP

(56) References cited:
- DE-U1- 202020 001 347
- US-A- 4 408 799
- US-A- 6 102 381
- US-B2- 6 898 824

## Description

The disclosure relates to a shock absorber, and more particularly to a shock absorber for a wheelchair.

A conventional wheelchair includes a backrest portion and a seat portion that is pivotably connected to the backrest portion. A user sitting in the conventional wheelchair may lean on the backrest portion to incline the backrest portion rearwardly to thereby allow oneself to stretch one's body and muscle. Although the conventional wheelchair may enable users, particularly those who have difficulty standing or walking by themselves, to move freely, providing a comfortable sitting experience with safety in mind is also an objective to be achieved in this field.

Document US6898824 discloses a locking system for a spring in a trekking stick.

Therefore, an object of the disclosure is to provide a shock absorber for a wheelchair.

According to the disclosure, the shock absorber adapted to be mounted on a wheelchair is provided. The wheelchair includes a seat portion and a backrest portion that is connected pivotably to a rear end of the seat portion. The shock absorber includes a base tube, a resilient member, a supporting member and an outer sleeve. The base tube extends along an axis, is adapted to be connected to the seat portion of the wheelchair, and includes a tubular wall. The tubular wall defines an accommodating space having an open end, and is formed with an elongated slot communicating with the accommodating space. The resilient member is disposed in the accommodating space. The supporting member has an upper portion that is adapted to be connected to the backrest portion, and a lower portion that is opposite to the upper portion along the axis, that extends into the accommodating space through the open end, and that abuts against the resilient member. The supporting member is formed with a slot unit including a sliding slot and a limiting slot. The sliding slot extends in the direction of the axis. The limiting slot extends transversely from a bottom end of the sliding slot and is parallel to the elongated slot of the tubular wall of the base tube. The outer sleeve is sleeved on the base tube and the supporting member, and has an inner surface and a limiting protrusion that extends inwardly from the inner surface through the elongated slot into the slot unit. The outer sleeve is rotatable relative to the base tube and the supporting member from a limited position, where the limiting slot and the elongated slot are entirely overlapped, and where the limiting protrusion is disposed at a distal end of the limiting slot away from the sliding slot, such that the supporting member is immovable relative to the base tube along the axis, to a retractable position, where the limiting protrusion is disposed at an intersection of the limiting slot and the sliding slot, such that the supporting member is movable relative to the base tube along the axis against a resilient force of the resilient member when the backrest portion pivots relative to the seat portion to incline rearwardly.

Other features and advantages of the disclosure will become apparent in the following detailed description of the embodiment(s) with reference to the accompanying drawings. It is noted that various features may not be drawn to scale.
FIG. 1 is a perspective view illustrating an embodiment of a shock absorber according to the present disclosure mounted on a wheelchair.
FIG. 2 is a fragmentary exploded perspective view of the embodiment.
FIG. 3 is a cross-sectional view of the embodiment, illustrating an outer sleeve of the embodiment being in a limited position.
FIG. 4 is a fragmentary schematic sectional view illustrating the outer sleeve being in the limited position.
FIG. 5 is a fragmentary sectional view similar to FIG. 4, but illustrating the outer sleeve being in a retractable position and a biasing member of the embodiment being not compressed.
FIG. 6 is a fragmentary sectional view of the embodiment similar to FIG. 5, but illustrating the biasing member being compressed.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

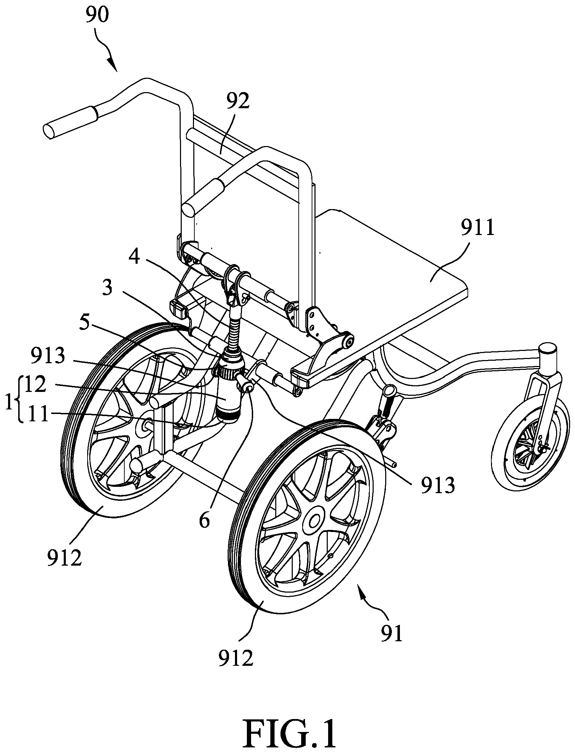

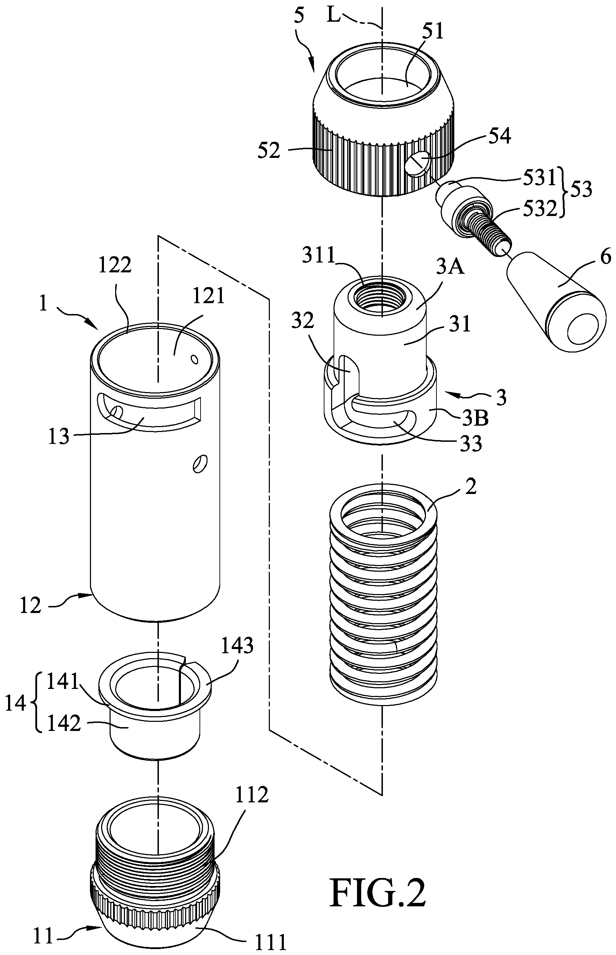

Referring to FIGS. 1 to 4, an embodiment of a shock absorber of the present disclosure is adapted to be mounted on a wheelchair 90. The wheelchair 90 includes a seat portion 91 and a backrest portion 92 that is connected pivotably to a rear end of the seat portion 91 so as to incline rearwardly relative to the seat portion 91. The seat portion 91 includes a seat 911 and a plurality of wheels 912 mounted under the seat 911. Since the main feature of the present disclosure does not reside in the manner of connecting the seat portion 91 and the backrest portion 92, and since various modifications thereof can be made as long as the backrest portion 92 is capable of inclining rearwardly relative to the seat portion 91, further details of the same are omitted for the sake of brevity. In this embodiment, the wheelchair 90 is an ordinary wheelchair, but may be an electric wheelchair in other embodiments of the present disclosure.

It should be noted that, in order to clearly illustrate the relationship between the shock absorber and the wheelchair 90, only the main structure of the wheelchair 90 is depicted in the drawings, and other components of the wheelchair 90 such as a back cushion and a seat cushion are omitted in the drawings.

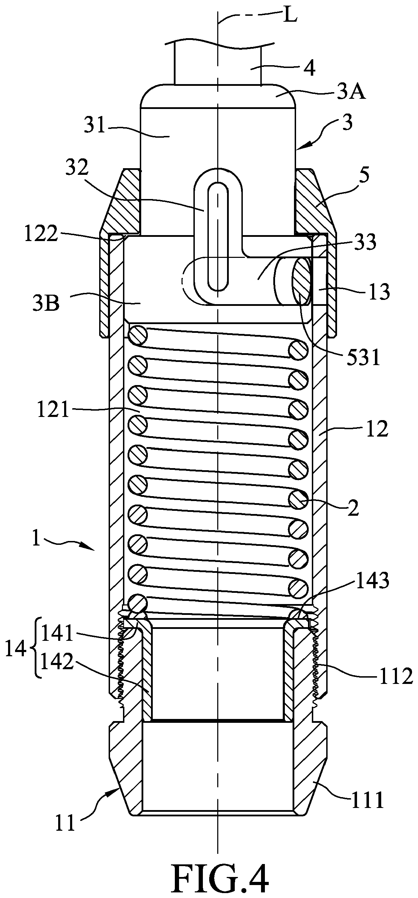

The shock absorber includes a base tube 1, a resilient member 2, a supporting member 3, an interconnecting member 4, an outer sleeve 5 and a rotating handle 6. The base tube 1 extends along an axis (L), is adapted to be connected to the seat portion 91 of the wheelchair 90, and includes a seat member 11, a tubular wall 12 and an abutment member 14. As shown in FIG. 4, the seat member 11 includes a surrounding wall 111 that surrounds the axis (L), that extends into the tubular wall 12, and that has an external threaded portion 112 formed at a top end of an outer surface thereof. The tubular wall 12 defines an accommodating space 121 having an open end 122, is formed with an elongated slot 13 communicating with the accommodating space 121, and has a bottom end opposite to the open end 122 along the axis (L) and threadedly engaging with the external threaded portion 112 of the surrounding wall 111 (i.e., the surrounding wall 111 of the seat member 11 extends into and threadedly engages with the bottom end of the tubular wall 12). The elongated slot 13 is formed adjacent to a top end of the tubular wall 12 and extends along a circumference of the tubular wall 12. The abutment member 14 is disposed in the accommodating space 121, and includes a flange 141 and a surrounding wall 142. The surrounding wall 142 extends into the seat member 11 along the axis (L). The flange 141 extends radially and outwardly from an upper periphery of the surrounding wall 142, is supported by a top end of the surrounding wall 111, and has an abutment surface 143 facing upwardly and spaced apart from the top end of the surrounding wall 111 along the axis (L). In this embodiment, the tubular wall 12 is adapted to be connected to the seat portion 91 through two connecting mechanisms 913 (see FIG. 1) of the wheelchair 90.

The resilient member 2 is disposed in the accommodating space 121 and placed on the abutment surface 143 of the abutment member 14. In this embodiment, the resilient member 2 is a compression spring.

The supporting member 3 includes a hollow shaft 31 having an upper portion (3A) that is adapted to be connected to the backrest portion 92, and a lower portion (3B) that is opposite to the upper portion (3A) along the axis (L), that extends into the accommodating space 121 through the open end 122, and that abuts against the resilient member 2. The shaft 31 is formed with a slot unit including a sliding slot 32 and a limiting slot 33. The sliding slot 32 extends in a direction of the axis (L). The limiting slot 33 extends transversely from a bottom end of the sliding slot 32, and is parallel to the elongated slot 13 of the tubular wall 12 of the base tube 1. The upper portion (3A) of the shaft 31 of the supporting member 3 is formed with a mounting bore 311 that extends along the axis (L).

The interconnecting member 4 has an upper end that is adapted to be pivotably connected to a lower side of the backrest portion 92, and a lower end that is opposite to the upper end along the axis (L) and that extends into the mounting bore 311 to be connected fixedly to the supporting member 3. The interconnecting member 4 is adapted to be moved by the backrest portion 92 during pivot movement of the backrest portion 92 relative to the seat portion 91 to incline rearwardly, thereby driving movement of the supporting member 3 relative to the base tube 1 along the axis (L) against a resilient force of the resilient member 2. In this embodiment, the lower end of the interconnecting member 4 is formed with an external thread, and the shaft 31 of the supporting member 3 is formed within the mounting bore 311 and with an internal thread threadedly engaging with the external thread of the lower end of the interconnecting member 4.

It should be noted that the configuration of the interconnecting member 4 may be modified in other embodiments as long as the interconnecting member 4 is movable downwardly by the backrest portion 92 via the connection therebetween.

In this embodiment, the outer sleeve 5 has an annular cross section. The outer sleeve 5 is sleeved on the base tube 1 and the supporting member 3, has an inner surface 51 and an outer surface 52 that is opposite to the inner surface 51, and includes a limiting member 53. In this embodiment, the outer sleeve 5 is sleeved on the shaft 31 and the tubular wall 12 of the base tube 1, with a top portion of the shaft 31 protruding outwardly of the outer sleeve 5. In this embodiment, the outer sleeve 5 is formed with an insertion hole 54 that extends through the inner surface 51 and the outer surface 52, and the limiting member 53 extends through the insertion hole 54. The limiting member 53 includes a limiting protrusion 531 that extends inwardly from the inner surface 51 through the elongated slot 13 into the slot unit, and a connecting portion 532 that extends outwardly from the outer surface 52 and that is connected to the rotating handle 6. To assemble the limiting member 53 and the rotating handle 6, the limiting protrusion 531 is brought to be inserted into the insertion hole 54 with the connecting portion 532 being left outside of the outer sleeve 5, and then the rotating handle 6 is connected to the connecting portion 532 through threaded engagement therebetween.

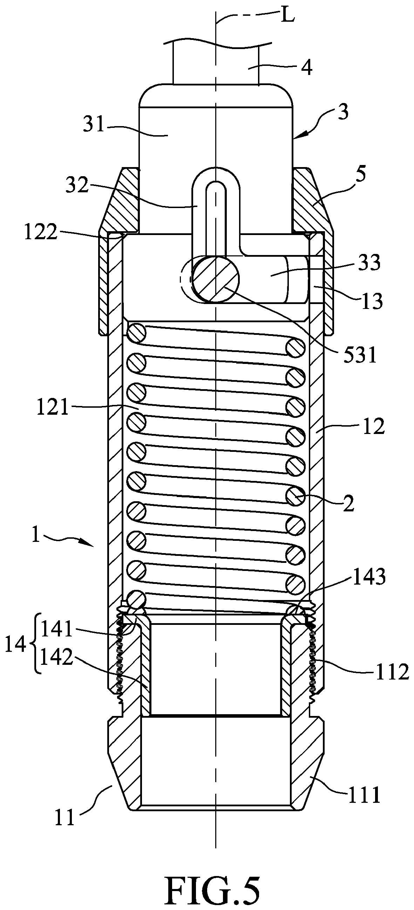

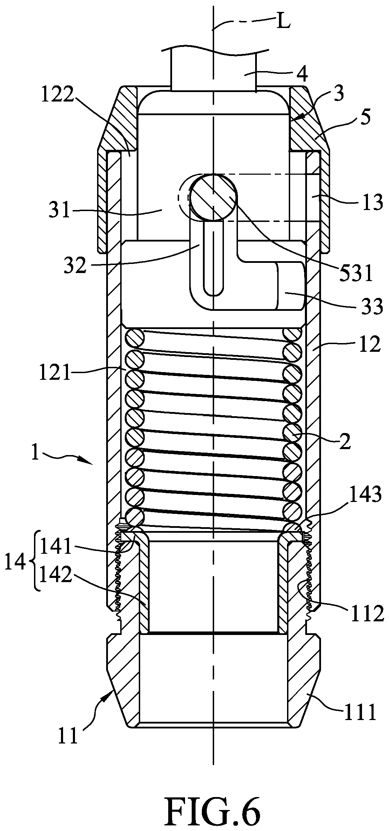

Further referring to FIGS. 5 and 6, the outer sleeve 5 is rotatable relative to the base tube 1 and the supporting member 3 about the axis (L) from a limited position (see FIG. 4) to a retractable position (see FIG. 5). Specifically, as shown in FIG. 4, when the outer sleeve 5 is in the limited position, the limiting slot 33 and the elongated slot 13 are entirely overlapped, and the limiting protrusion 531 is disposed at a distal end of the limiting slot 33 away from the sliding slot 32, such that the supporting member 3 is immovable relative to the base tube 1 along the axis (L). As shown in FIG. 5, when the outer sleeve 5 is in the retractable position, the limiting protrusion 531 is disposed at an intersection of the limiting slot 33 and the sliding slot 32, such that the supporting member 3 is movable relative to the base tube 1 along the axis (L) against the resilient force of the resilient member 2 when the backrest portion 92 pivots relative to the seat portion 91 to incline rearwardly. FIG. 6 illustrates that, after the supporting member 3 is moved downwardly relative to the base tube 1, the resilient member 2 is compressed by the supporting member 3, and the limiting protrusion 531 is disposed at a top end of the sliding slot 32, which is opposite to the intersection of the limiting slot 33 and the sliding slot 32.

Referring to FIGS. 1, 3 and 4, to ensure safety of the user sitting in the wheelchair 90, the backrest portion 92 is supposed to be not able to recline during movement of the wheelchair 90, so the outer sleeve 5 is to be kept in the limited position for securing the backrest portion 92.

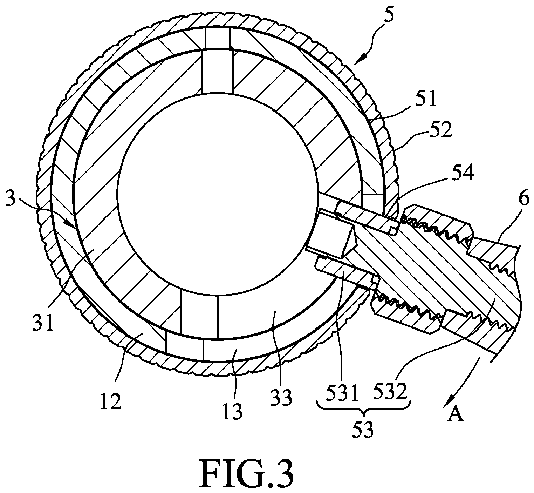

Referring to FIGS. 3, 5 and 6, when the user sitting in the wheelchair 90 wishes to stretch muscle, the rotating handle 6 may be operated in a direction indicated by an arrow (A) shown in FIG. 3 to rotate the outer sleeve 5 from the limited position to the retractable position. When the outer sleeve 5 is moved to the retractable position, the limiting protrusion 531 is disposed at the intersection of the limiting slot 33 and the sliding slot 32, and the user who wishes to stretch may exert a force on the backrest portion 92 so the backrest portion 92 pivots and inclines rearwardly and the interconnecting member 4 is moved downwardly, thereby driving downward movement of the supporting member 3 relative to the base tube 1 against the resilient force of the resilient member 2. When the user stops exerting a force on the backrest portion 92, the resilient force provided by the resilient member 2 moves the supporting member 3 and the interconnecting member 4 upwardly, so the backrest portion 92 is restored to its origin position and the outer sleeve 5 may be rotated back to the limited position as desired.

Since the outer sleeve 5 is rotatable between the limited position and the retractable position through operation of the rotating handle 6, the wheelchair 90 may be adjusted to allow or prohibit rearward inclination of the backrest portion 92. Additionally, when the outer sleeve 5 is in the retractable position, the backrest portion 92 is allowed to pivot relative to the seat portion 91 for a predetermined angle until the limiting protrusion 531 is moved to the top end of the sliding slot 32. In this way, it is convenient and safe for the user sitting in the wheelchair 90 to comfortably stretch, and the backrest portion 92 may be restored to its original position by virtue of the resilient member 2. On the other hand, when the outer sleeve 5 is in the limited position, rearward inclination of the backrest portion 92 is prohibited so the wheelchair 90 may be safely moved, and the possibility of the user accidentally falling from the wheelchair 90 while leaning rearwardly on the backrest portion 92 during movement of the wheelchair 90may be reduced.

To sum up, by virtue of the outer sleeve 5 of the embodiment of the present disclosure being rotatable relative to the base tube 1 from the limited position to the retractable position, and cooperating with the supporting member 3 and the resilient member 2, the wheelchair 90 mounted with the embodiment allows the user sitting therein to stretch while a safe movement of the wheelchair 90 may also be realized. That is to say, movement of the supporting member 3 along the axis (L) is prohibited when the outer sleeve 5 is in the limited position, so the backrest portion 92 may not recline, thereby ensuring safety of the user sitting in the wheelchair 90 during movement of the wheelchair 90. On the other hand, when the outer sleeve 5 is in the retractable position, the supporting member 3 may be driven to move downwardly by the backrest portion 92 that inclines rearwardly, and be driven to be restored by the resilient force provided by the resilient member 2.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure. The scope of protection is defined by the appended claims.

## Claims

1. A shock absorber adapted to be mounted on a wheelchair (90), the wheelchair (90) including a seat portion (91) and a backrest portion (92) that is connected pivotably to a rear end of the seat portion (91), said shock absorber being **characterized by**:
a base tube (1) extending along an axis (L), adapted to be connected to the seat portion (91) of the wheelchair (90), and including a tubular wall (12) that defines an accommodating space (121) having an open end (122) and that is formed with an elongated slot (13) communicating with said accommodating space (121);
a resilient member (2) disposed in said accommodating space (121);
a supporting member (3) having an upper portion (3A) that is adapted to be connected to the backrest portion (92), and a lower portion (3B) that is opposite to said upper portion (3A) along the axis (L), that extends into said accommodating space (121) through said open end (122), and that abuts against said resilient member (2), said supporting member (3) being formed with a slot unit including
a sliding slot (32) that extends in the direction of the axis (L), and
a limiting slot (33) that extends transversely from a bottom end of said sliding slot (32), and that is parallel to said elongated slot (13) of said tubular wall (12) of said base tube (1); and
an outer sleeve (5) sleeved on said base tube (1) and said supporting member (3), and having an inner surface (51) and a limiting protrusion (531) that extends inwardly from said inner surface (51) through said elongated slot (13) into said slot unit,
said outer sleeve (5) being rotatable relative to said base tube (1) and said supporting member (3) from a limited position, where said limiting slot (33) and said elongated slot (13) are entirely overlapped, and where said limiting protrusion (531) is disposed at a distal end of said limiting slot (33) away from said sliding slot (32), such that said supporting member (3) is immovable relative to said base tube (1) along the axis (L), to a retractable position, where said limiting protrusion (531) is disposed at an intersection of said limiting slot (33) and said sliding slot (32), such that said supporting member (3) is movable relative to said base tube (1) along the axis (L) against a resilient force of said resilient member (2) when the backrest portion (92) pivots relative to the seat portion (91) to incline rearwardly.

2. The shock absorber of claim 1, further **characterized by** a rotating handle (6), said outer sleeve (5) further having an outer surface (52) that is opposite to said inner surface (51), said rotating handle (6) being connected to said outer surface (52) and operable to rotate said outer sleeve (5) between the limited position and the retractable position.

3. The shock absorber of claim 1 or 2, further **characterized by** an interconnecting member (4) having an upper end that is adapted to be pivotably connected to a lower side of the backrest portion (92) and a lower end that is opposite to said upper end, said upper portion (3A) of said supporting member (3) being formed with a mounting bore (311) that extends along the axis (L), said lower end of said interconnecting member (4) extending into said mounting bore (311) to be connected fixedly to said supporting member (3) such that, when said outer sleeve (5) is in the retractable position, said interconnecting member (4) is adapted to be moved by the backrest portion (92) during pivot movement of the backrest portion (92) relative to the seat portion (91) to incline rearwardly, thereby driving movement of the supporting member (3) relative to said base tube (1) along the axis (L) against the resilient force of said resilient member (2).

4. The shock absorber of claim 3, **characterized in that** said lower end of said interconnecting member (4) is formed with an external thread, and said supporting member (3) is formed within said mounting bore (311), and with an internal thread threadedly engaging with said external thread of said lower end of said interconnecting member (4).

5. The shock absorber of any one of claims 1 to 4, **characterized in that** said base tube (1) further includes a seat member (11) threadedly engaging with a bottom end of said tubular wall (12) that is opposite to said open end (122) of said accommodating space (121).

6. The shock absorber of claim 5, **characterized in that**:
said seat member (11) includes a surrounding wall (111) that surrounds the axis (L) and that extends into and connected to said bottom end of said tubular wall (12);
said base tube (1) further includes an abutment member (14) that is disposed in said accommodating space (121), that is supported by a top end of said surrounding wall (11), and that has an abutment surface (143); and
said resilient member (2) is placed on said abutment surface (143).

## Patentansprüche

1. Stoßdämpfer, der ausgelegt ist, um auf einem Rollstuhl (90) montiert zu werden, wobei der Rollstuhl (90) einen Sitzbereich (91) und einen Rückenlehnenbereich (92) aufweist, der schwenkbar mit einem hinteren Ende des Sitzbereichs (91) verbunden ist, wobei der Stoßdämpfer durch Folgendes gekennzeichnet ist:
ein Basisrohr (1), das sich entlang einer Achse (L) erstreckt, das ausgelegt ist, um mit dem Sitzbereich (91) des Rollstuhls (90) verbunden zu sein, und eine rohrförmige Wand (12) umfasst, die einen Einhausungsraum (121) mit einem offenen Ende (122) definiert, und die mit einem länglichen Schlitz (13) ausgebildet ist, der mit dem Einhausungsraum (121) in Kommunikation steht;
ein elastisches Element (2), das in dem Einhausungsraum (121) angeordnet ist;
ein Trägerelement (3), das einen oberen Abschnitt (3A), der ausgelegt ist, um mit dem Rückenlehnenbereich (92) verbunden zu sein, und einen unteren Abschnitt (3B) aufweist, der dem oberen Abschnitt (3A) entlang der Achse (L) gegenüberliegt, der sich durch das offene Ende (122) in den Einhausungsraum (121) erstreckt und der auf dem elastischen Element (2) anliegt, wobei das Trägerelement (3) mit einer Schlitzeinheit ausgebildet ist, die Folgendes umfasst:
einen Gleitschlitz (32), der sich in die Richtung der Achse (L) erstreckt, und
einen Begrenzungsschlitz (33), der sich von einem unteren Ende des Gleitschlitzes (32) quer erstreckt und der parallel zu dem länglichen Schlitz (13) der rohrförmigen Wand (12) des Basisrohrs (1) ist; und
eine Außenhülle (5), die das Basisrohr (1) und das Trägerelement (3) einhüllt und eine Innenoberfläche (51) und einen Begrenzungsvorsprung (531) aufweist, die sich von der Innenoberfläche (51) durch den länglichen Schlitz (13) nach innen in die Schlitzeinheit erstreckt,
wobei die Außenhülle (5) relativ zu dem Basisrohr (1) und dem Trägerelement (3) aus einer Begrenzungsposition, in der der Begrenzungsschlitz (33) und der längliche Schlitz (13) vollständig überlappend sind, und wobei der Begrenzungsvorsprung (531) an einem distalen Ende des Beschränkungsschlitzes (33) abgewandt von dem Gleitschlitz (32) so angeordnet ist, dass das Trägerelement (3) relativ zu dem Basisrohr (1) entlang der Achse (L) unbeweglich ist, in eine zurückgezogene Position drehbar ist, wobei der Begrenzungsvorsprung (531) an einem Schnittpunkt des Beschränkungsschlitzes (33) und des Gleitschlitzes (32) so angeordnet ist, dass das Trägerelement (3) relativ zu dem Basisrohr (1) entlang der Achse (L) gegen eine elastische Kraft des elastischen Elements (2) bewegbar ist, wenn der Rückenlehnenbereich (92) relativ zu dem Sitzbereich (91) geschwenkt wird, um sich nach hinten zu neigen.

2. Stoßdämpfer nach Anspruch 1, der ferner durch einen Drehgriff (6) gekennzeichnet ist, wobei die Außenhülle (5) ferner eine Außenoberfläche (52) aufweist, die zur Innenoberfläche (51) entgegengesetzt ist, wobei der Drehgriff (6) mit der Außenüberfläche (52) verbunden und betätigbar ist, um die Außenhülle (5) zwischen der Begrenzungsposition und der zurückziehbaren Position zu drehen.

3. Stoßdämpfer nach Anspruch 1 oder 2, der ferner durch ein Zwischenverbindungselement (4) gekennzeichnet ist, das ein oberes Ende, das ausgelegt ist, um schwenkbar mit einer unteren Seite des Rückenlehnenbereichs (92) verbunden zu sein, und ein unteres Ende aufweist, das dem oberen Ende gegenüberliegt, wobei der obere Abschnitt (3A) des Trägerelements (3) mit einer Befestigungsbohrung (311) ausgebildet ist, die sich entlang der Achse (L) erstreckt, wobei sich das untere Ende des Zwischenverbindungselements (4) in die Befestigungsbohrung (311) erstreckt, die starr mit dem Trägerelement (3) zu verbinden ist, sodass, wenn sich die Außenhülle (5) in der zurückziehbaren Position befindet, das Zwischenverbindungselement (4) ausgelegt ist, um durch den Rückenlehnenbereich (92) während der Schwenkbewegung des Rückenlehnenbereichs (92) relativ zu dem Sitzbereich (91) bewegt zu werden, um sich nach hinten zu neigen, wodurch die Bewegung des Trägerelements (3) relativ zu dem Basisrohr (1) entlang der Achse (L) gegen die elastische Kraft des elastischen Elements (2) angetrieben wird.

4. Stoßdämpfer nach Anspruch 3, **dadurch gekennzeichnet, dass** das untere Ende des Zwischenverbindungselements (4) mit einem Außengewinde ausgebildet ist, und das Trägerelement (3) innerhalb der Befestigungsbohrung (311) und mit einem Innengewinde ausgebildet ist, das mit dem Außengewinde des unteren Endes des Zwischenverbindungselements (4) in Gewindeeingriff ist.

5. Stoßdämpfer nach einem der Ansprüche 1 bis 4, **dadurch gekennzeichnet, dass** das Basisrohr (1) ferner ein Sitzelement (11) umfasst, das mit einem unteren Ende der rohrförmigen Wand (12), die dem offenen Ende (122) des Einhausungsraums (121) gegenüberliegt, in Gewindeeingriff ist.

6. Stoßdämpfer nach Anspruch 5, **dadurch gekennzeichnet, dass**:
das Sitzelement (11) eine umgebende Wand (111) umfasst, die die Achse (L) umgibt und die sich in das untere Ende der rohrförmigen Wand (12) erstreckt und damit verbunden ist;
das Basisrohr (1) ferner ein Anlageelement (14) umfasst, das in dem Einhausungsraum (121) angeordnet ist, das von einem oberen Ende der umgebenden Wand (11) getragen wird, und das eine Anlageoberfläche (143) aufweist; und
das elastische Element (2) auf der Anlageoberfläche (143) angeordnet ist.

## Revendications

1. Amortisseur adapté pour être monté sur un fauteuil roulant (90), le fauteuil roulant (90) comportant une partie siège (91) et une partie dossier (92) qui est reliée de manière pivotante à une extrémité arrière de la partie siège (91), ledit amortisseur étant **caractérisé par** :
un tube de base (1) s'étendant le long d'un axe (L), adapté pour être relié à la partie siège (91) du fauteuil roulant (90), et comportant une paroi tubulaire (12) qui définit un espace de logement (121) ayant un une extrémité ouverte (122) et qui est pourvue d'une fente allongée (13) communiquant avec ledit espace de logement (121) ;
un élément élastique (2) disposé dans ledit espace de logement (121) ;
un élément de support (3) ayant une partie supérieure (3A) qui est adaptée pour être reliée à la partie dossier (92), et une partie inférieure (3B) qui est opposée à ladite partie supérieure (3A) le long de l'axe (L), qui s'étend dans ledit espace de logement (121) à travers ladite extrémité ouverte (122), et qui vient en butée contre ledit élément élastique (2), ledit élément de support (3) étant formé d'une unité à fentes comportant
une fente coulissante (32) qui s'étend dans la direction de l'axe (L), et
une fente de limitation (33) qui s'étend transversalement à partir d'une extrémité inférieure de ladite fente coulissante (32), et qui est parallèle à ladite fente allongée (13) de ladite paroi tubulaire (12) dudit tube de base (1) ; et
un manchon extérieur (5) emmanché sur ledit tube de base (1) et ledit élément de support (3), et ayant une surface intérieure (51) et une saillie de limitation (531) qui s'étend vers l'intérieur depuis ladite surface intérieure (51) à travers ladite fente allongée (13) dans ladite unité à fentes,
ledit manchon extérieur (5) pouvant tourner par rapport audit tube de base (1) et audit élément de support (3) à partir d'une position limitée, où ladite fente de limitation (33) et ladite fente allongée (13) se chevauchent entièrement, et où ladite saillie de limitation (531) est disposée à une extrémité distale de ladite fente de limitation (33) au loin de ladite fente coulissante (32), de telle sorte que ledit élément de support (3) est immobile par rapport audit tube de base (1) le long de l'axe (L), vers une position rétractable, où ladite saillie de limitation (531) est disposée à une intersection de ladite fente de limitation (33) et de ladite fente coulissante (32), de telle sorte que ledit élément de support (3) est mobile par rapport audit tube de base (1) le long de l'axe (L) à l'encontre d'une force élastique dudit élément élastique (2) lorsque la partie dossier (92) pivote par rapport à la partie siège (91) pour s'incliner vers l'arrière.

2. Amortisseur selon la revendication 1, **caractérisé en outre par** une poignée rotative (6), ledit manchon extérieur (5) ayant en outre une surface extérieure (52) qui est opposée à ladite surface intérieure (51), ladite poignée rotative (6) étant reliée à ladite surface extérieure (52) et pouvant être actionnée pour faire tourner ledit manchon extérieur (5) entre la position limitée et la position rétractable.

3. Amortisseur selon la revendication 1 ou 2, **caractérisé en outre par** un élément d'interconnexion (4) ayant une extrémité supérieure qui est adaptée pour être reliée de manière pivotante à un côté inférieur de la partie dossier (92) et une extrémité inférieure qui est opposée à ladite extrémité supérieure, ladite partie supérieure (3A) dudit élément de support (3) étant pourvue d'un alésage de montage (311) qui s'étend le long de l'axe (L), ladite extrémité inférieure dudit élément d'interconnexion (4) s'étendant dans ledit alésage de montage (311) devant être relié de manière fixe audit élément de support (3) de telle sorte que, lorsque ledit manchon extérieur (5) est dans la position rétractable, ledit élément d'interconnexion (4) est adapté pour être déplacé par la partie dossier (92) pendant un mouvement de pivotement de la partie dossier (92) par rapport à la partie siège (91) pour s'incliner vers l'arrière, entraînant ainsi un mouvement de l'élément de support (3) par rapport audit tube de base (1) le long de l'axe (L) à l'encontre de la force élastique dudit élément élastique (2).

4. Amortisseur selon la revendication 3, **caractérisé en ce que** ladite extrémité inférieure dudit élément d'interconnexion (4) est pourvue d'un filetage externe, et ledit élément de support (3) est formé à l'intérieur dudit alésage de montage (311), et d'un filetage interne venant en prise par filetage avec ledit filetage externe de ladite extrémité inférieure dudit élément d'interconnexion (4).

5. Amortisseur selon l'une quelconque des revendications 1 à 4, **caractérisé en ce que** ledit tube de base (1) comporte en outre un élément de siège (11) venant en prise par filetage avec une extrémité inférieure de ladite paroi tubulaire (12) qui est opposée à ladite extrémité ouverte (122) dudit espace de logement (121).

6. Amortisseur selon la revendication 5, **caractérisé en ce que** :
ledit élément de siège (11) comporte une paroi d'entourage (111) qui entoure l'axe (L) et qui s'étend dans ladite extrémité inférieure de ladite paroi tubulaire (12), et est reliée à celle-ci ;
ledit tube de base (1) comporte en outre un élément de butée (14) qui est disposé dans ledit espace de logement (121), qui est supporté par une extrémité supérieure de ladite paroi environnante (11), et qui possède une surface de butée (143) ; et
ledit élément élastique (2) est placé sur ladite surface de butée (143).
